# EUROPEAN PATENT SPECIFICATION

(11) **EP 4 197 272 B1**
(45) Date of publication and mention of the grant of the patent: **20.05.2026**
(21) Application number: 20824222.2
(22) Date of filing: 11.12.2020
(51) Int. Cl.: H04W 74/0816, H04W 84/12

(54) **WIRELESS TRANSMITTER FOR WIDE BANDWIDTH COMMUNICATION**
DRAHTLOSER SENDER FÜR BREITBANDKOMMUNIKATION
ÉMETTEUR SANS FIL POUR COMMUNICATION À LARGE BANDE PASSANTE

(43) Date of publication of application: 21.06.2023
(73) Proprietor: Huawei Technologies Co., Ltd., Shenzhen, Guangdong 518129 (CN)
(72) Inventor: KLEIN, Arik, 80992 Munich (DE); EPSTEIN, Avner, 80992 Munich (DE); EZRI, Doron, 80992 Munich (DE); SHILO, Shimon, 80992 Munich (DE); PATURY, Shahar, 80992 Munich (DE); WEITZMAN, Avi, 80992 Munich (DE)
(74) Representative: Körber, Martin Hans
(86) International application number: PCT/EP2020/085794
(87) International publication number: WO 2022/122169

(56) References cited:
- US-A1- 2017 338 935
- US-A1- 2019 306 920
- LAURENT CARIOU ET AL: "Multi-channel Transmissions Name Company Address Phone email Orange Labs", 21 October 2009 (2009-10-21), XP055381583, Retrieved from the Internet <URL:https://mentor.ieee.org/802.11/dcn/09/11-09-1022-00-00ac-multi-channel-transmissions.ppt> [retrieved on 20170614]
- N/A: "Extension Channel Cca Proposed Solutions ; 11-06-0608-02-000n-extension-channel-cca-proposed-solutions", IEEE DRAFT; 11-06-0608-02-000N-EXTENSION-CHANNEL-CCA-PROPOSED-SOLUTIONS, IEEE-SA MENTOR, PISCATAWAY, NJ USA, vol. 802.11n, no. 2, 28 June 2006 (2006-06-28), pages 1 - 20, XP017687202
- JOHN SON (WILUS): "Secondary Channel CCA of HE STA ; 11-15-1337-01-00ax-secondary-channel-cca-of-he-sta", IEEE DRAFT; 11-15-1337-01-00AX-SECONDARY-CHANNEL-CCA-OF-HE-STA, IEEE-SA MENTOR, PISCATAWAY, NJ USA, vol. 802.11ax, no. 1, 11 November 2015 (2015-11-11), pages 1 - 13, XP068099305

## Description

### TECHNICAL FIELD

The present disclosure relates to wireless communications. More specifically, the present disclosure relates to a wireless transmitter for wide bandwidth communication.

### BACKGROUND

A popular short/intermediate range wireless communication standard is wireless local area network (WLAN). WLAN supports a variety of data transfer modes including (but not only) file transfer, emails, web browsing and real-time applications such as audio and video applications. Most modern WLANs are based on the IEEE 802.11 standard (or 802.11, for short) and are marketed under the Wi-Fi brand name. WLAN networks link one or more devices to a wireless access point, which in turn provides connectivity to the wider area Internet. In 802.11 systems, devices that wirelessly connect to each other are referred to as "stations", "mobile stations", "user devices" or STA or UE for short. Wireless stations can be either wireless access points or wireless clients (or mobile stations). Access points (APs), which are also referred to as wireless routers, act as base stations for the wireless network. APs transmit and receive radio frequency signals for communication with wireless client devices. APs can also typically couple to the Internet in a wired fashion. Wireless clients operating on an 802.11 network can be any of various devices such as laptops, tablet devices, smart phones, or fixed devices such as desktop computers.

In some prior art systems, WLAN stations are able to communicate using channels of various band widths. The initial IEEE 802.11 specifications defined a 20 MHz communication bandwidth. Starting from IEEE 802.11n the bandwidth has increased from 20 MHz to 40 MHz, 80 MHz, 160 MHz and even 320 MHz. When a wide bandwidth, i.e. a bandwidth being an integer multiple of 20 MHz is used by an IEEE 802.11 wireless station, the wide bandwidth is usually divided into 20 MHz channels. One of the 20 MHz channels is selected as the primary channel (PC), while the other channels are defined as secondary channels (SCs). For WLAN stations operating with a wide bandwidth any transmission must include the primary channel.

The IEEE 802.11 standard defines different channel access methods for accessing the primary channel and the secondary channels. More specifically, for accessing the primary channel a normal CSMA/CA with AIFS and "EDCA Backoff" is used. Moreover, two different CCA thresholds for signal detection are used, namely -82 dBm for valid Wi-Fi signal detection and -62 dBm for any signal (energy detection).

The channel access method used for accessing a secondary channel differs from the channel access method for accessing the primary channel in particular in that channel clear sensing as long as the CCA of the primary channels indicates that it is idle. The secondary channel CCA indication is ignored by the MAC layer until a PIFS before the transmission should start. For Wi-Fi signal detection different CCA thresholds are used, namely -72 dBm for a 20 MHz secondary channel, -72dBm for a 40 MHz secondary channel, -69 dBm for a 80 MHz secondary channel and -66 dBm for a 160 MHz secondary channel.

These different channel access configurations for the primary channel and the secondary channel(s) may lead to an increased interference level for the communication between two or more WLAN stations sharing part of the bandwidth without using the same primary channel. This is because, the different CCA level thresholds for the primary channel and the secondary channels result in a higher noise floor in the secondary channels. Moreover, the different channel access configurations for the primary channel and the secondary channel(s) may cause one or more of the following issues.

The probability that PIFS before a transmission there is a valid PHY preamble in the secondary channel(s) is very low (in contrast to the primary channel), because in the secondary channel(s) the accesses are started randomly (in time). In such a scenario, the relevant CCA threshold level is the one for energy detection so that the noise level for the secondary channel may be up to between 20 dB and 26 dB larger than the one for the primary channel.

The lack of time synchronization on the secondary channel(s) increases the probability of missing SIFS and may cause starting a transmission on non-idle channels. In such a scenario, the noise level for the secondary channel may be even more than 26 dB larger than the one for the primary channel.

The "EDCA Backoff" for the secondary channel(s) is done on 2-3 time slots only. Therefore, the collision (between two devices using this wide BW) probability for the secondary channel(s) is higher than for the primary channel.

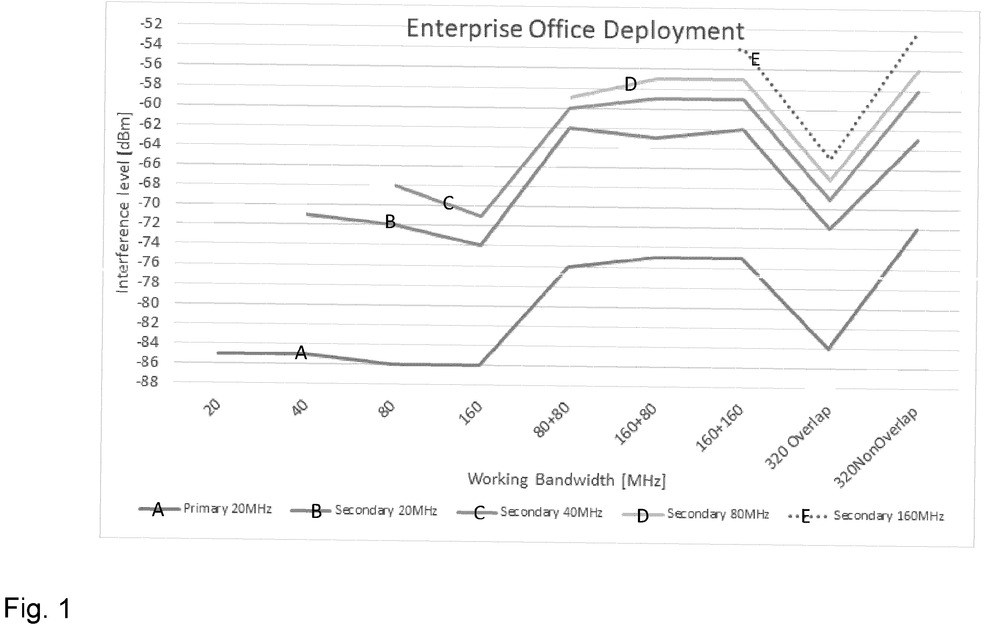

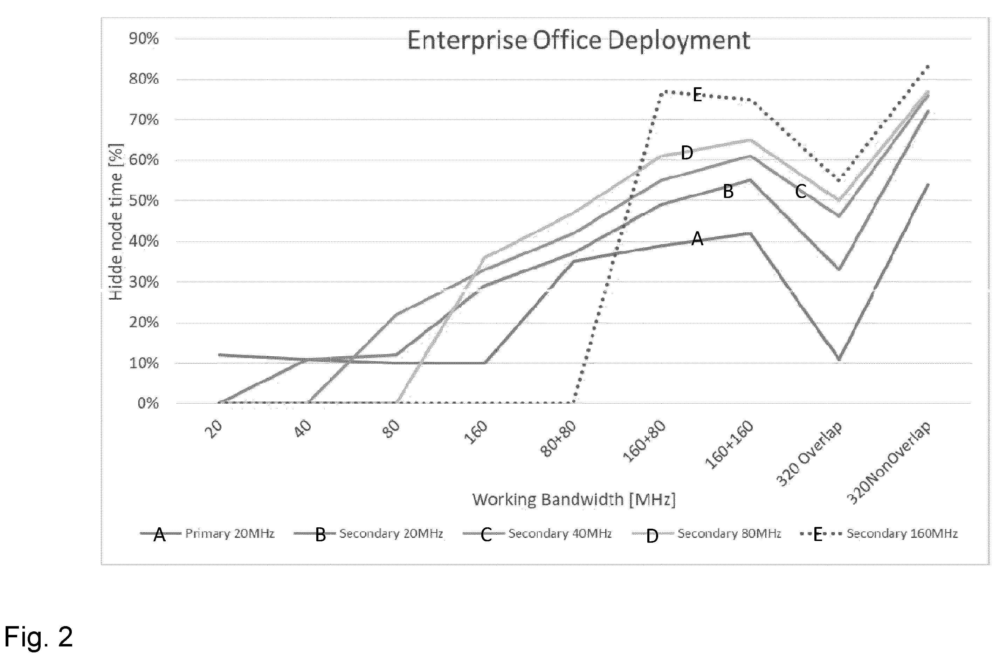

Figures 1 and 2 show the interference level of a plurality of conventional channels, including a 20 MHz primary channel as well as a 20 MHz secondary and further secondary channels with larger bandwidth for different total bandwidths, as well as the probability for a hidden node for an exemplary enterprise office deployment of WLAN devices. As can be taken from figure 1, the primary 20 MHz channel interference level (graph A) is 14 dB less than the secondary 20 MHz channel (graph B) and up to 20 dB less than the secondary 160 MHz channel (graph E). Moreover, the interference level on the 20 MHz primary channel is up to 10 dB less when each WLAN device is using the same primary channel compared with scenarios, where each WLAN device is using a different primary channel. As can be taken from figure 2, the hidden node probability for the secondary 20 MHz channel (graph B) is up to 40% higher than the hidden node probability in the 20 MHz primary channel (graph A), while the hidden node probability in the secondary 160 MHz channel (graph E) is up to 100% higher than the primary channel. As will be further appreciated, the hidden node probability is dramatically increased when each WLAN device is using a different primary channel in comparison with the scenarios, where all WLAN devices are using the same primary channel. Thus, it may be concluded that the interference level in the conventional operation of primary and secondary channels is mainly caused by hidden nodes.

"Extension Channel Cca Proposed Solutions; 11-06-0608-02-000n-extension-channel-cca-proposed-solutions", IEEE DRAFT; (20060628), vol. 802.11n, no. 2, pages 1 - 20, discloses the aggregation of two non-contiguous channels, where both Primary1 Channel and Primary2 Channel use "AIFS+backoff" scheme. US 2017/338935 A1 discloses where a primary channel and an alternative primary channel both using AIFS as the interframe space time and a back-off procedure is performed for both channels. US 2019/306920 A1 discloses an embodiment where the terminal may perform a CCA for an AIFS time in all the transmission channels after the data transmission is completed, and may perform the post backoff procedure 42 when all the channels in which the CCA is performed are idle. JOHN SON (WILUS), "Secondary Channel CCA of HE STA ; 11-15-1337-01-00ax-secondary-channel-cca-of-he-sta", IEEE DRAFT; (20151111), vol. 802.11ax, no. 1, pages 1 - 13, proposes to use CCA and a back off counter for both Control and Extension channel (Alternative 3).

### SUMMARY

It is an objective of the present disclosure to provide a wideband wireless transmitter and a wideband wireless transmission method with an improved usage of the primary channel and the secondary channel.

The foregoing and other objectives are achieved by the subject matter of the independent claims. Further implementation forms are apparent from the dependent claims, the description and the figures.

Generally, embodiments disclosed herein are based on the idea to partition the wide bandwidth, such as a 160 MHz bandwidth, of a wireless transmitter into bandwidth (or frequency) segments, such as two 80 MHz bandwidth segments or four 40 MHz bandwidth segments. One of the bandwidth segments includes a 20 MHz primary channel as well as one or more conventionally operated 20 MHz secondary channels, while each of the other bandwidth segments include a 20MHz pivot channel as well as one or more conventionally operated 20 MHz secondary channels. The CCA rules are implemented independently within each bandwidth segment by treating the applicable 20 MHz pivot channel as if it was a 20MHz primary channel. Moreover, embodiments disclosed herein are based on the concept to operate all of the 20 MHz secondary channels as 20 MHz pivot channels. In other words, according to embodiments disclosed herein the CCA rules may be applied over all 20 MHz communication channels within the bandwidth, such as 160 MHz, regardless of whether the channel is the primary channel or one of the secondary channels.

More specifically, according to a first aspect a wireless transmitter for transmitting data to one or more wireless receivers is provided.

The wireless transmitter comprises a communication interface configured to transmit data to the wireless receiver using a plurality of channels over a plurality of different portions of a total bandwidth, including a primary channel and a plurality of secondary channels.

Moreover, the wireless transmitter comprises a processing circuitry configured to operate the primary channel with a carrier-sense multiple access with collision avoidance, CSMA/CA, scheme having a first of a plurality of CSMA/CA scheme configurations and to operate at least one selected secondary channel, herein referred to as a "pivot" channel, of the plurality of secondary channels with the CSMA/CA scheme having the same first CSMA/CA scheme configuration.

As used herein and as will be described in more detail below, a CSMA/CA scheme configuration may define, for instance, CCA thresholds, such as a signal detect, SD, threshold and/or an energy detect, ED, threshold, as well as the temporal behaviour of the CSMA/CA scheme by defining, for instance, the required type of inter frame spaces (IFS), such as AIFS and PIFS.

In a further possible implementation form of the first aspect, each of the plurality of channels, i.e. the primary channel, the at least one pivot channel and the other conventionally operated secondary channels, has a bandwidth of 20 MHz.

In a further possible implementation form of the first aspect, the plurality of channels are grouped into at least two bandwidth (or frequency) segments having the same number of channels, including a primary bandwidth segment and at least one secondary bandwidth segment, wherein the primary bandwidth segment comprises a first subset of the plurality of channels, including the primary channel and one or more further conventionally operated secondary channels, and wherein each of the one or more secondary bandwidth segments comprises a further subset of the plurality of channels, including the at least one selected secondary channel, i.e. the pivot channel, and one or more further conventionally operated secondary channels. The primary bandwidth segment and the at least one secondary bandwidth segment may have a bandwidth of, for instance, 40 MHz, 80 MHz or 160 MHz.

In a further possible implementation form of the first aspect, the processing circuitry of the wireless transmitter is configured to operate a channel clear assessment, CCA, scheme over the one or more further secondary channels only for a certain pre-defined time interval prior to a data transmission to the wireless receiver. In an implementation form, the pre-defined time interval may be the aCCATime defined by the IEEE 802.11 standard, which indicates the CCA duration in symbol periods.

In a further possible implementation form of the first aspect, the processing circuitry of the wireless transmitter is configured to operate the carrier-sense multiple access with collision avoidance, CSMA/CA, scheme with the first CSMA/CA scheme configuration over the primary channel and in parallel over the bandwidth portion of all of the plurality of secondary channels.

In a further possible implementation form of the first aspect, the CSMA/CA scheme with the first CSMA/CA scheme configuration operated over the primary channel and over the at least one selected secondary channel defines an arbitrated interframe space, AIFS.

In the claimed invention, the processing circuitry is further configured to operate the primary channel with a binary exponential back-off, BEB, and the at least one selected secondary channel without a BEB.

Thus, in an implementation form the AIFS is defined for the primary channel and applied to the pivot channel(s), while the BEB is defined and applied only for the primary channel (but not for the pivot channel(s)). As defined by the IEEE 802.11 standard (EDCA), the AIFS is equal to a SIFS (16 us) plus 2 to 15 time slots (9 us each). The AIFS is a more recent definition that replaces DIFS in the TGe EDCA definition that enables AIFS to be SIFS+(2 to15) slots depending on AC or QoS (DIFS was SIFS+2 x slots always). The back-off process based on the BEB does not start until the channel is "free" for at least the AIFS time. As defined by the IEEE 802.11 standard, the BEB is a counter that counts down time slots and starts transmission when the counter has reached a value of zero. The back-off process stops, if the medium is not idle (i.e. the CCA indicates a busy medium).

In a further possible implementation form of the first aspect, the CSMA/CA scheme with the first CSMA/CA scheme configuration operated over the primary channel and over the at least one selected secondary channel comprises a clear channel assessment, CCA, scheme, wherein the CCA scheme defines for the primary channel and the at least one selected secondary channel, i.e. the pivot channel, a signal detect, SD, threshold and an energy detect, ED, threshold.

In a further possible implementation form of the first aspect, the SD threshold has a value of about -82 dBm and the ED threshold has a value of about -62 dBm.

In a further possible implementation form of the first aspect, the processing circuitry is configured to operate the CCA scheme over the primary channel and over the at least one selected secondary channel, i.e. the pivot channel, for a complete contention period.

In a further possible implementation form of the first aspect, the processing circuitry is configured to exclude the secondary bandwidth segment including the at least one selected secondary channel, i.e. the pivot channel, from a further data transmission, in case a signal level of the at least one selected secondary channel within the secondary bandwidth segment is larger than the SD threshold within a pre-defined time period, in particular the aCCATime, after the at least one selected secondary channel is free or larger than the ED threshold within the pre-defined time period, in particular the aCCATime, during an AIFS time period prior to the start of transmission, as set by the primary channel.

In a further possible implementation form of the first aspect, the processing circuitry is configured to start using the excluded secondary bandwidth segment for data transmission again, if the excluded secondary bandwidth segment is idle for a pre-defined time interval.

In a further possible implementation form of the first aspect, the CSMA/CA scheme used by the primary channel and the at least one secondary channel, i.e. the at least one pivot channel is the CSMA/CA scheme according to the IEEE 802.11 standard and related standards.

According to a second aspect a wireless transmission method for transmitting data to a wireless receiver is disclosed. The wireless transmission method comprises the steps of:
transmitting data to the wireless receiver using a plurality of channels over a plurality of different portions of a total bandwidth, including a primary channel and a plurality of secondary channels;
operating the primary channel with a carrier-sense multiple access with collision avoidance, CSMA/CA, scheme having a first of a plurality of CSMA/CA scheme configurations; and
operating at least one selected secondary channel, i.e. the pivot channel of the plurality of secondary channels with the CSMA/CA scheme having the same first CSMA/CA scheme configuration.

The wireless transmission method according to the second aspect of the present disclosure can be performed by the wireless transmitter according to the first aspect of the present disclosure. Thus, further features of the wireless transmission method according to the second aspect of the present disclosure result directly from the functionality of the wireless transmitter according to the first aspect of the present disclosure as well as its different implementation forms described above and below.

According to a third aspect a computer program product is provided, comprising program code which causes a computer or a processor to perform the wireless transmission method according to the second aspect, when the program code is executed by the computer or the processor.

Details of one or more embodiments are set forth in the accompanying drawings and the description below. Other features, objects, and advantages will be apparent from the description, drawings, and claims.

### BRIEF DESCRIPTION OF THE DRAWINGS

In the following, embodiments of the present disclosure are described in more detail with reference to the attached figures and drawings, in which:
Fig. 1 shows graphs illustrating the interference level as a function of the working bandwidth for a primary channel and a plurality of secondary channels operated by a conventional wireless transmitter;
Fig. 2 shows graphs illustrating the hidden node problem for a primary channel and a plurality of secondary channels operated by a conventional wireless transmitter;
Fig. 3 is a schematic diagram of a wireless communication system, including a wireless transmitter according to an embodiment;
Figs. 4a and 4b show a schematic diagram illustrating the channel access behaviour for a plurality of communication channels of a wireless transmitter according to an embodiment;
Figs. 5a and 5b show a schematic diagram illustrating the channel access behaviour for a plurality of communication channels of a wireless transmitter according to a further embodiment;
Fig. 6 is a flow diagram illustrating a wireless transmission method according to an embodiment; and
Fig. 7 shows graphs illustrating the throughput as a function of the working bandwidth for a primary channel and a plurality of secondary channels operated by a wireless transmitter according to an embodiment.

In the following, identical reference signs refer to identical or at least functionally equivalent features.

### DETAILED DESCRIPTION OF THE EMBODIMENTS

In the following description, reference is made to the accompanying figures, which form part of the disclosure, and which show, by way of illustration, specific aspects of embodiments of the present disclosure or specific aspects in which embodiments of the present disclosure may be used. It is understood that embodiments of the present disclosure may be used in other aspects and comprise structural or logical changes not depicted in the figures. The following detailed description, therefore, is not to be taken in a limiting sense, and the scope of the present disclosure is defined by the appended claims.

For instance, it is to be understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

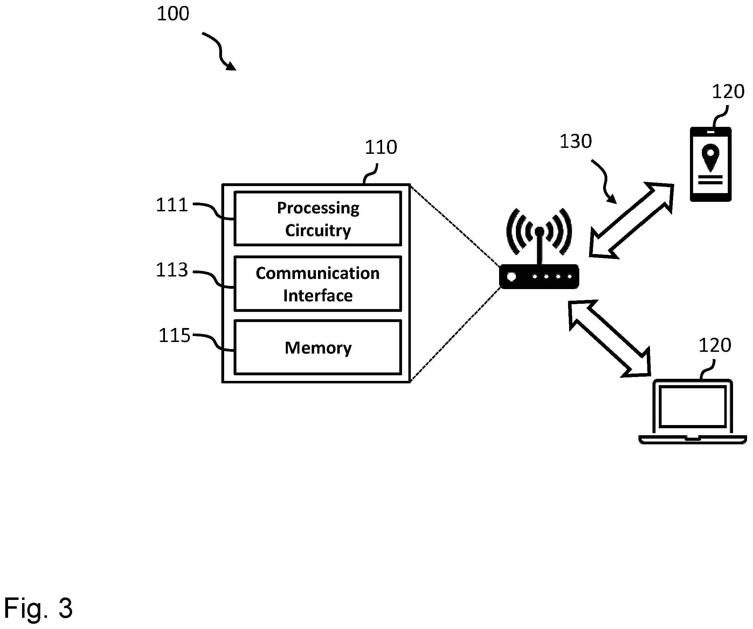

Figure 3 is a schematic diagram of a wireless communication system 100, including a wireless transmitter 110 according to an embodiment. The wireless transmitter 110 is configured to communicate with one or more wireless receivers 120. In an embodiment, the wireless transmitter 110 may be a wireless access point or base station 110 configured to communicate with one or more wireless terminals 120, such as mobile phones, tablet computers, laptop computers and the like. In a further embodiment, the wireless transmitter 110 may be non-AP wireless station, e.g. a wireless terminal.

As can be taken from figure 3, the wireless transmitter 110 comprises a processing circuitry or processor 111. The processor 111 may be implemented in hardware and/or software, which when executed causes the wireless transmitter 110 to perform the functions and methods described herein. The hardware may comprise digital circuitry, or both analog and digital circuitry. Digital circuitry may comprise components such as application-specific integrated circuits (ASICs), field-programmable arrays (FPGAs), digital signal processors (DSPs), or general-purpose processors.

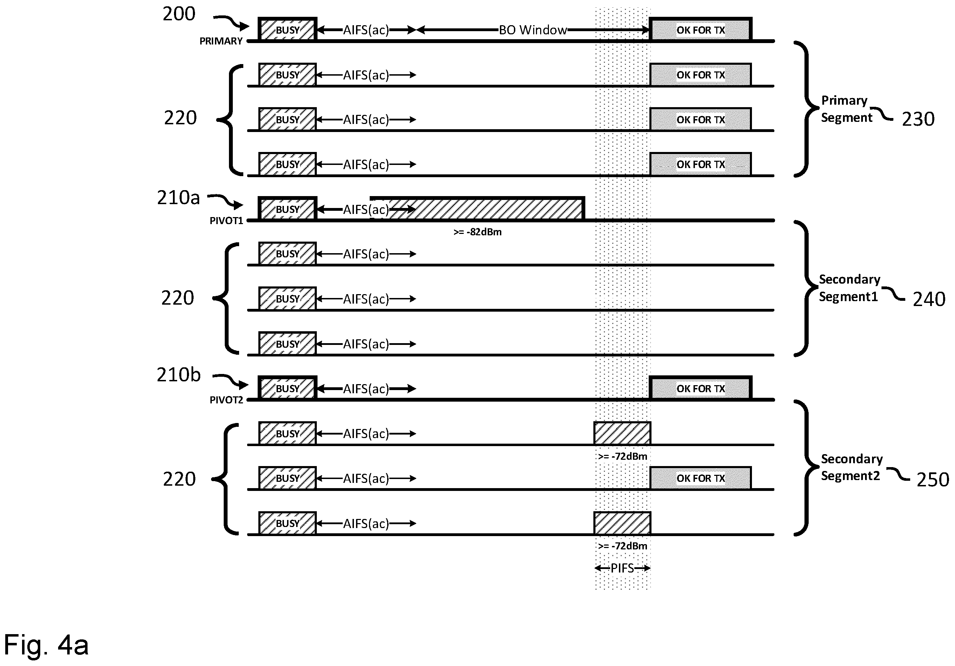

Moreover, the wireless transmitter 110 comprises a communication interface 113 configured to transmit data to the one or more wireless receivers 120 using a plurality of bandwidth (or frequency) channels 130 over a plurality of different portions of a total bandwidth, including a primary channel 200 (see, for instance, figure 4a) and a plurality of secondary channels. In an embodiment, the communication interface 113 may comprise, for instance, one or more antennas for communicating with the one or more wireless receivers 120 using the primary channel 200 and the plurality of secondary channels 210a-k, 220.

Furthermore, the wireless transmitter 110 may comprise an electronic memory 115 configured to store data, for instance, the data to be transmitted to or received from the one or more wireless receivers 120.

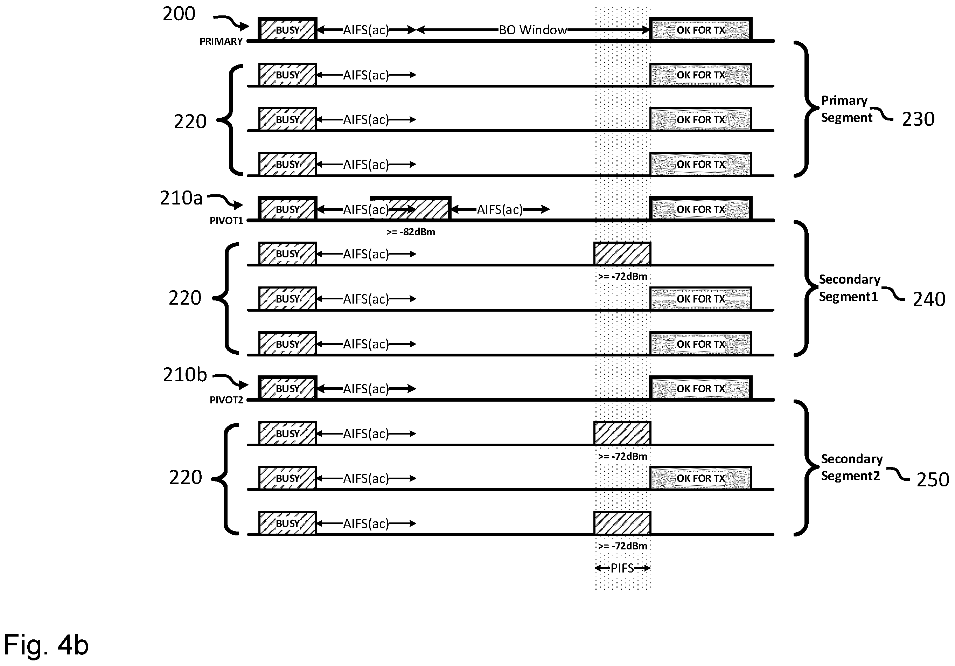

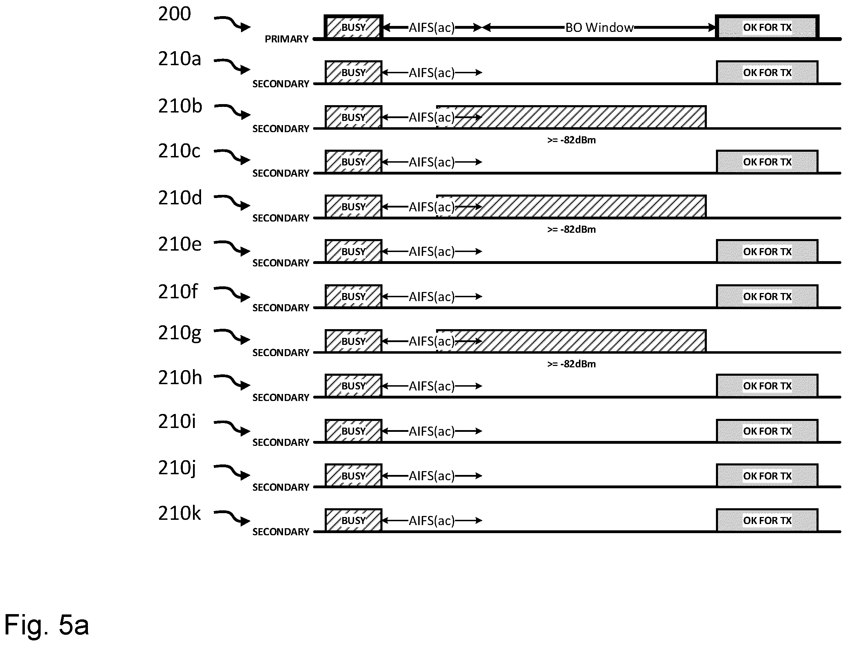

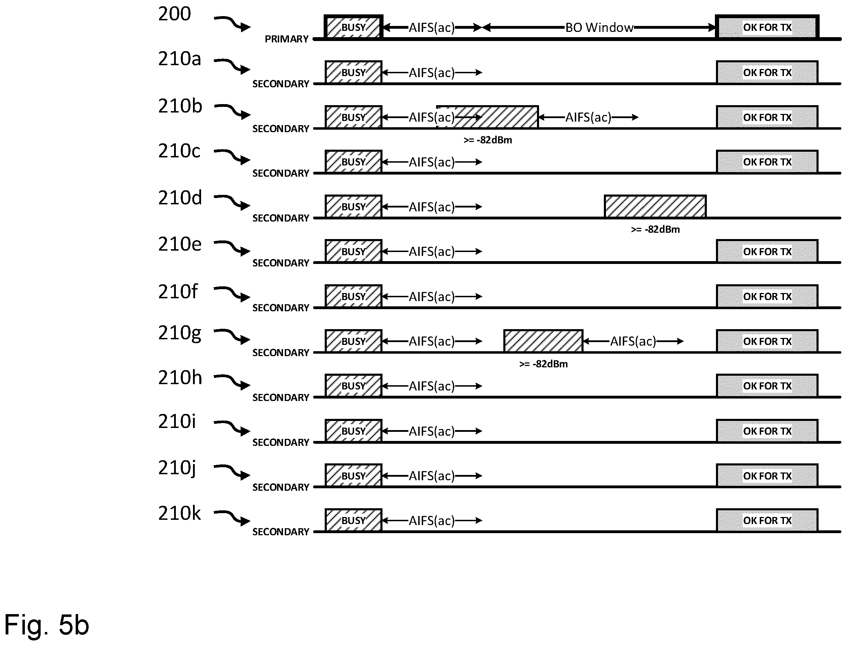

As will be described in the following in more detail under further reference to figures 4a, 4b and 5a, 5b, the processing circuitry 111 of the wireless transmitter 110 is configured to operate the primary channel 200 with a carrier-sense multiple access with collision avoidance, CSMA/CA, scheme having a first of a plurality of possible CSMA/CA scheme configurations and to operate at least one selected secondary channel 220a-k, herein referred to as a "pivot channel", of the plurality of secondary channels with the CSMA/CA scheme having the same first CSMA/CA scheme configuration. As used herein and as will be described in more detail below, a CSMA/CA scheme configuration may define, for instance, CCA thresholds, such as a signal detect, SD, threshold and/or an energy detect, ED, threshold, as well as the temporal behaviour of the CSMA/CA scheme by defining, for instance, the required type of inter frame spaces (IFS), such as AIFS and PIFS. In an embodiment, the CSMA/CA, scheme used by the processing circuitry 111 for operating the primary channel 200 is the CSMA/CA scheme defined by the IEEE 802.11 standard for operating the primary channel. In an embodiment, each of the plurality of channels, i.e. the primary channel 200, the at least one pivot channel 200a-k and the other conventionally operated secondary channels 220, may have a bandwidth of 20 MHz.

In the following further embodiments of the wireless transmitter 110 will be described. A first group of further embodiments is based on the idea to partition the wide operating bandwidth, such as a 160 MHz bandwidth, of the wireless transmitter 110 into bandwidth (or frequency) segments, such as two 80 MHz bandwidth segments or four 40 MHz bandwidth segments, wherein one of the bandwidth segments includes the 20 MHz primary channel 200 as well as one or more conventionally operated 20 MHz secondary channels 220, while each of the other bandwidth segments include a 20 MHz pivot channel 210a,b as well as one or more conventionally operated 20 MHz secondary channels 220. The CCA rules are implemented independently within each bandwidth segment by treating the applicable 20 MHz pivot channel 210a,b as if it was a 20MHz primary channel.

More specifically, in a further embodiment of the first group, the plurality of channels may be grouped into at least two bandwidth (or frequency) segments 230, 240, 250 having the same number of channels, including a primary bandwidth segment and at least one secondary bandwidth segment. The primary bandwidth segment 230 comprises a first subset of the plurality of channels, including the primary channel 200 and one or more further conventionally operated secondary channels 220, and each of the one or more secondary bandwidth segments 240, 250 comprises a further subset of the plurality of channels, including the at least one selected secondary channel, i.e. the pivot channel 210a,b, and one or more further conventionally operated secondary channels 220. The primary bandwidth segment 230 and the at least one secondary bandwidth segment 240, 250 may have a bandwidth of, for instance, 40 MHz, 80 MHz or 160 MHz.

In an embodiment, the CCA procedure may be implemented by the wireless transmitter 110 in different stages. For selecting the bandwidth segments 230, 240, 250 the wireless transmitter 110 may be configured to perform CCA sensing over the primary channel 200 within the primary bandwidth segment 230 and over all pivot channels 210a,b in the secondary segments 240, 250. In an embodiment, the wireless transmitter 110 is configured to perform the CCA sensing over the pivot channel(s) 210a,b using the same detection thresholds as for the primary channel (e.g. a threshold of -82 dBm for Wi-Fi signals. In an embodiment, the wireless transmitter 110 is configured to perform the CCA sensing over the pivot channel(s) 210a,b during an entire contention period and, thus, is not limited to only the duration of a PIFS before the start of the transmission (as is the case in conventionally operated secondary channels). In an embodiment, the wireless transmitter 110 may be configured to use for the pivot channel(s) 210a,b the same back-off, BO, counter value as for the primary channel 200. In an embodiment, the wireless transmitter 110 is configured to exclude an entire secondary bandwidth segment 240, 250 (e.g. by marking it as a busy segment) from the next transmission, when the signal level in the pivot channel 210a,b of that secondary segment 240, 250 is higher than the CCA level (-82dBm for a Wi-Fi signal and -62dBm for any other signal). If the pivot channel 210a,b in a previously excluded secondary segment 240, 250 becomes "idle" again for a period of maximal AIFS and the back-off counter of the primary channel is greater than or equal to 3 (~PIFS), the wireless transmitter 110 may include this segment 240, 250 into the back-off process again (i.e., by marking it as an idle segment).

For selecting secondary channels 220, in an embodiment, the wireless transmitter 110 may be configured to perform the CCA Sensing over secondary channels 220 within all non-busy secondary bandwidth segments 240, 250 for a time interval of PIFS (or 3 last BO slots) before the start of transmission. In an embodiment, the wireless transmitter 110 may be configured to perform CCA sensing for Wi-Fi signals over the secondary channels 220 using the conventional IEEE 802.11 thresholds, i.e. -72 dBm for a Wi-Fi signal in one conventional 20 MHz secondary channel 220 and an additional 3 dB for every additional 20MHz. In an embodiment, the wireless transmitter 110 is further configured to select, when the back-off counter reaches the value of 3 (which is approximately equal to a PIFS), the bandwidth for PPDU transmission as defined by the IEEE 802.11ax/be standard (e.g. dynamic bandwidth and/or puncturing).

In an embodiment, the wireless transmitter 110 is configured to select the bandwidth for a PPDU transmission as follows. In an embodiment, the wireless transmitter 110 may select SU-PPDU or Full BW MU-MIMO. In an embodiment, the wireless transmitter 110 may select OFDMA (with or without MU-MIMO). Secondary channels with "busy" channel indication may not be used for the next transmission. In an embodiment, when the primary channel back-off counter reaches 0, the wireless transmitter 110 may select the bandwidth according to the 802.11ax/be OFDMA and Non-OFDMA puncturing modes when busy secondary channels are not used.

In a second group of further embodiments described in more detail below, all of the 20 MHz secondary channels may be operated by the wireless transmitter 110 as 20 MHz pivot channels 210a-k (as illustrated in figures 5a and 5b). In other words, according to embodiments the wireless transmitter 110 may be configured to apply the same CCA over all 20 MHz communication channels within the bandwidth, such as 160 MHz, regardless of whether the channel is the primary channel 200 or one of the secondary channels 210a-k.

More specifically, in an embodiment, the processing circuitry 111 of the wireless transmitter 110 is configured to operate the carrier-sense multiple access with collision avoidance, CSMA/CA, scheme with the first CSMA/CA scheme configuration over the primary channel 200 and in parallel over the bandwidth portion of all of the plurality of secondary channels 210a-k.

In an embodiment, the wireless transmitter 110 is configured to implement the CCA and the back-off on the primary channel 200 and every secondary pivot channel 200a-k using the same detection thresholds, e.g. -82 dBm for the PHY preamble and -62 dBm for any signal. In an embodiment, the wireless transmitter 110 is configured to perform CCA sensing over the primary channel 200 and every secondary pivot channel 200a-k during an entire contention period (i.e. CCA sensing will not be limited to only aCCAMidTime + PIFS before the start of a transmission, as in conventionally operated secondary channels). In an embodiment, the wireless transmitter 110 is configured to set a single value for the back-off (BO) for the primary channel 200, which will be used for all of the secondary channels 200a-k as well.

Figures 4a and 4b show a first example for an embodiment of the wireless transmitter 110, wherein the plurality of channels comprises the primary channel 200 and two pivot channels 210a,b as well as a plurality of conventionally operated secondary channels 220.

In the example shown in figure 4a, the primary channel 200 within the primary bandwidth segment 230 has been free for at least the duration of the AIFS time. Consequently, the back-off process implemented by the CSMA/CA scheme has commenced and been completed (as illustrated by the "BO window" in figure 4a). Thus, the primary channel 200 of the primary segment 230 may be used for transmission. All secondary channels 220 within the primary segment 230 have been "free" PIFS before the end of the back-off process of the primary channel 200 (i.e. for the last 3 BO slots (3x9=27 us, PIFS=16+9=25 us) the CCA indicated that the channel is idle). Therefore, in addition to the primary channel 200 the three secondary channels 220 within the primary segment 230 may be used for transmission as well.

The first secondary bandwidth segment 240 comprises a first pivot channel 210a and three secondary channels 220 (like the primary frequency segment 230). In the example shown in figure 4a, the first pivot channel 210a of the first secondary bandwidth segment 240 has not been "free" for at least the duration of the AIFS time until the end of the back-off process. Therefore, the processing circuitry 111 of the wireless transmitter 110 is configured to not use any channels of the first secondary bandwidth segment 240, including the first pivot channel 210a and the three secondary channels 220, i.e. to exclude the first secondary bandwidth segment 240 from any further transmissions for the time being.

The second secondary bandwidth segment 250 comprises a second pivot channel 210b and three secondary channels 220 (like the primary bandwidth segment 230 and the first secondary bandwidth segment 240). In the example shown in figure 4a, the second pivot channel 210b of the second secondary bandwidth segment 250 has been "free" for at least the duration of the AIFS time until the end of the back-off process. Therefore, the wireless transmitter 110 may use the second secondary bandwidth segment 250 for transmission. However, in the example shown in figure 4a two of the three secondary channels 220 of the second secondary bandwidth segment 250 have not been free for a PIFS duration before the end of the back-off process and will not be used for transmission by the wireless transmitter 110. The secondary channel 220 in the secondary bandwidth segment 250 that has been free for a PIFS duration before the end of the back-off process, may be applicable for transmission by the wireless transmitter 110. However, the pattern of channels available for transmission within the secondary bandwidth segment 250 is not allowed according to IEEE 802.11 provisions (including IEEE 802.11ax/be amendments concerning puncturing or dynamic bandwidth). Therefore, an embodiment of the wireless transmitter 110 in accordance with these IEEE 802.11 provisions may exclude the entire secondary bandwidth segment 250 from an upcoming transmission.

The example shown in figure 4b differs from the example shown in figure 4a only with respect to the behaviour of the channels of the first secondary bandwidth segment 240. More specifically, in the example shown in figure 4b the first pivot channel 210a of the first secondary bandwidth segment 240 was busy during the AIFS duration of the primary channel 200 of the primary bandwidth segment 230, but became "free" for at least AIFS duration before the end of the back-off process. Therefore, the wireless transmitter 110 is configured to use the first secondary bandwidth segment 240 for transmission (different to the example shown in figure 4a). However, one of the three secondary channels 220 of the first secondary bandwidth segment 240 has been busy during a PIFS duration before the end of the back-off process. Therefore, the wireless transmitter 110 is configured to exclude that specific secondary channel 220 from transmission and use only the remaining channels of the first secondary bandwidth segment 240 for transmission.

An example for the second group of embodiments is shown in figures 5a and 5b, i.e. where the wireless transmitter 110 is configured to operate all of the 20 MHz secondary channels as 20 MHz pivot channels 210a-k. In this case, all secondary channels, i.e. pivot channels 210a-k are required to be "free" for at least AIFS time before the end of the back-off process (and not just PIFS before).

In figure 5a, three secondary channels, namely the channels 210b, 210d and 210g, have not been "free" for at least AIFS time before the end of the back-off process. Therefore, the wireless transmitter 110 is configured to not use these secondary channels 210b, 210d and 210g for an upcoming transmission.

In figure 5b, two secondary channels were busy during the AIFS duration of the primary channel, but became "free" for at least AIFS duration before the end of the back-off process, namely channels 210b and 210g. Therefore, the wireless transmitter 110 is configured to use these secondary channels for transmission. One secondary channel 210d has not been "free" for at least AIFS time before the end of the back-off process. Therefore, the wireless transmitter 110 is configured to not use that secondary channel 210d for an upcoming transmission.

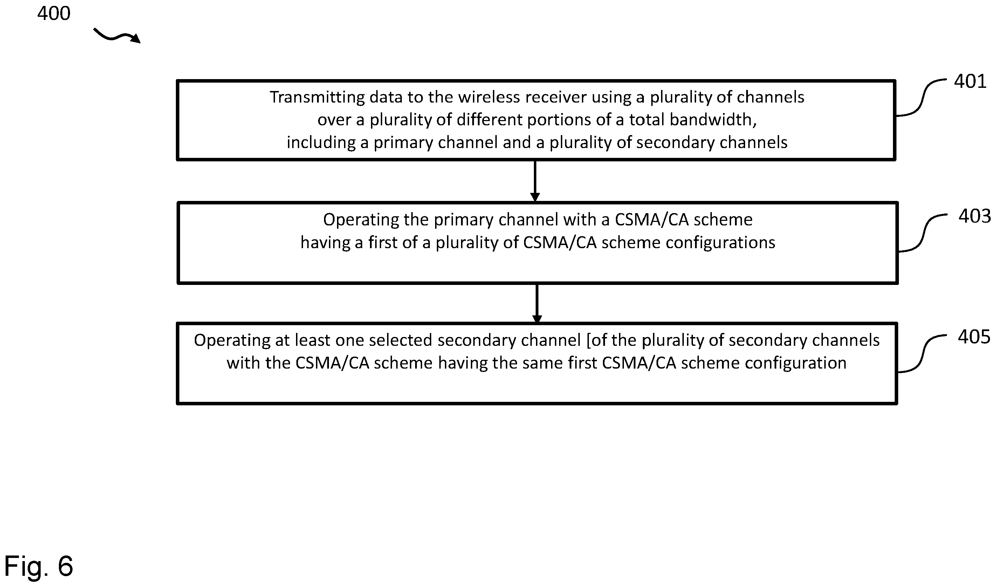

Figure 6 is a flow diagram illustrating a wireless transmission method 400 for transmitting data to a wireless receiver 120. The wireless transmission method 400 comprises the steps of:
transmitting 401 data to the wireless receiver 120 using a plurality of channels 130 over a plurality of different portions of a total bandwidth, including a primary channel 200 and a plurality of secondary channels 210a-k, 220;
operating 403 the primary channel 200 with a carrier-sense multiple access with collision avoidance, CSMA/CA, scheme having a first of a plurality of CSMA/CA scheme configurations; and
operating 405 at least one selected secondary channel, i.e. the pivot channel 210a-k of the plurality of secondary channels with the CSMA/CA scheme having the same first CSMA/CA scheme configuration.

Further features of the method 400 result directly from the structure and/or functionality of the wireless transmitter 110 as well as its different embodiments described above.

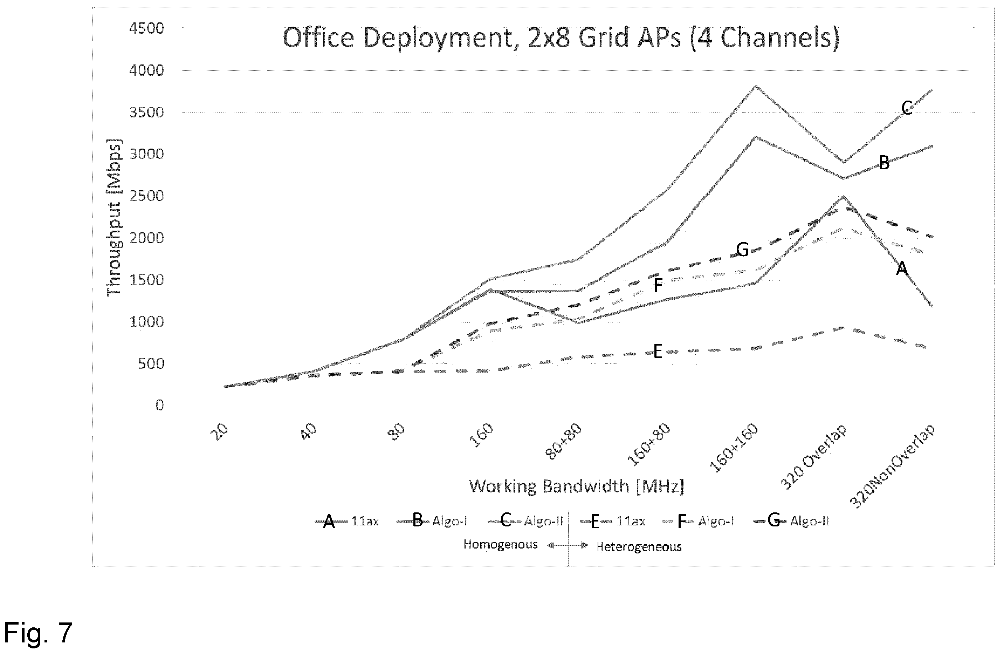

Figure 7 shows graphs illustrating the throughput as a function of the working bandwidth for the primary channel 200 and a plurality of secondary channels 210a-k, 220 operated by the wireless transmitter 100 according to an embodiment. More specifically, figure 7 illustrates some of the advantages provided by the wireless transmitter 110 working in partial mode (figures 4a, 4b) and in full mode (figures 5a and 5b) for two scenarios, namely a homogenous scenario, where all devices use the same primary channel,) and a heterogeneous scenario, where each device uses a different primary channel. As can be taken from figure 7, a wireless transmitter 110 according to an embodiment provides a higher gain in the heterogeneous scenario, although the absolute performance in the homogenous scenario may be higher. This indicates that the wireless transmitter 110 according to an embodiment mitigates a weakness of the IEEE 802.11 wide bandwidth access method.

The person skilled in the art will understand that the "blocks" ("units") of the various figures (method and apparatus) represent or describe functionalities of embodiments of the present disclosure (rather than necessarily individual "units" in hardware or software) and thus describe equally functions or features of apparatus embodiments as well as method embodiments (unit = step).

In the several embodiments provided in the present application, it should be understood that the disclosed system, apparatus, and method may be implemented in other manners. For example, the described embodiment of an apparatus is merely exemplary. For example, the unit division is merely logical function division and may be another division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the invention may be integrated into one processing unit, or each of the units may exist alone physically, or two or more units are integrated into one unit.

## Claims

1. A wireless transmitter (110) for transmitting data to a wireless receiver (120), wherein the wireless transmitter (110) comprises:
a communication interface (113) configured to transmit data to the wireless receiver (120) using a plurality of channels (130) over a plurality of different portions of a total bandwidth, including a primary channel (200) and a plurality of secondary channels (210a-k, 220); and
a processing circuitry (111) configured to operate the primary channel (200) with a carrier-sense multiple access with collision avoidance, CSMA/CA, scheme having a first of a plurality of CSMA/CA scheme configurations and to operate at least one selected secondary channel (210a-k) of the plurality of secondary channels with the CSMA/CA scheme having the first CSMA/CA scheme configuration, wherein each CSMA/CA scheme configuration defines a clear channel assessment, CCA, threshold, and/or a required type of inter frame space,
wherein the processing circuitry (111) is further configured to operate the primary channel (200) with a binary exponential back-off, BEB, and the at least one selected secondary channel (210a-k) without a BEB.

2. The wireless transmitter (110) of claim 1, wherein each of the plurality of channels (130) has a bandwidth of 20 MHz.

3. The wireless transmitter (110) of claims 1 or 2, wherein the processing circuitry (111) is configured to operate the carrier-sense multiple access with collision avoidance, CSMA/CA, scheme with the first CSMA/CA scheme configuration over the primary channel (200) and over all of the plurality of secondary channels (210a-k).

4. The wireless transmitter (110) of claim 1 or 2, wherein the plurality of channels are grouped into at least two bandwidth segments (230, 240, 250) having the same number of channels, including a primary bandwidth segment (230) and at least one secondary bandwidth segment (240, 250), wherein the primary bandwidth segment (230) comprises a first subset of the plurality of channels, including the primary channel (200) and one or more secondary channels (220), and wherein each of the at least one secondary bandwidth segments (240, 250) comprises a further subset of the plurality of channels, including the at least one selected secondary channel (210a,b) and one or more further secondary channels (220).

5. The wireless transmitter (110) of claim 4, wherein the processing circuitry (111) is configured to operate a channel clear assessment, CCA, scheme over the one or more further secondary channels (220) only for a certain time interval prior to a data transmission to the wireless receiver (120).

6. The wireless transmitter (110) of any one of the preceding claims, wherein the CSMA/CA scheme with the first CSMA/CA scheme configuration operated over the primary channel (200) and over the at least one selected secondary channel (210a-k) defines an arbitrated interframe space, AIFS.

7. The wireless transmitter (110) of any one of the preceding claims, wherein the CSMA/CA scheme with the first CSMA/CA scheme configuration operated over the primary channel (200) and the at least one selected secondary channel (210a-k) comprises a clear channel assessment, CCA, scheme, wherein the CCA scheme defines for the primary channel (200) and the at least one selected secondary channel (210a-k) a signal detect, SD, threshold and an energy detect, ED, threshold.

8. The wireless transmitter (110) of claim 7, wherein the SD threshold has a value of about -82 dBm and the ED threshold has a value of about -62 dBm.

9. The wireless transmitter (110) of claim 7 or 8, wherein the processing circuitry (111) is configured to operate the CCA scheme over the primary channel (200) and over the at least one selected secondary channel (210a-k) for a contention period.

10. The wireless transmitter (110) of any one of claims 7 to 9, wherein the plurality of channels are grouped into at least two bandwidth segments (230, 240, 250) having the same number of channels, including a primary bandwidth segment (230) and at least one secondary bandwidth segment (240, 250), wherein the primary bandwidth segment (230) comprises a first subset of the plurality of channels, including the primary channel (200) and one or more secondary channels (220), and wherein each of the at least one secondary bandwidth segments (240, 250) comprises a further subset of the plurality of channels, including the at least one selected secondary channel (210a,b) and one or more further secondary channels (220), and wherein the processing circuitry (111) is configured to exclude the secondary bandwidth segment (240, 250) including the at least one selected secondary channel (210a,b) from a further data transmission, in case a signal level of the at least one selected secondary channel (210a,b) within the secondary bandwidth segment (240, 250) is larger than the SD threshold within a pre-defined time period after the at least one selected secondary channel (210a,b) is free or larger than the ED threshold within the pre-defined time period during an AIFS time period prior to the start of transmission.

11. The wireless transmitter (110) of claim 10, wherein the processing circuitry (111) is configured to start using the excluded secondary bandwidth segment (240, 250) for data transmission again, if the excluded secondary bandwidth segment (240, 250) is idle for a pre-defined time interval.

12. The wireless transmitter (110) of any one of the preceding claims, wherein the CSMA/CA scheme used by the primary channel (200) and the at least one secondary channel (210a-k) is the CSMA/CA scheme according to the IEEE 802.11 standard.

13. A wireless transmission method (400) for transmitting data to a wireless receiver (120), wherein the method (400) comprises:
transmitting (401) data to the wireless receiver (120) using a plurality of channels (130) over a plurality of different portions of a total bandwidth, including a primary channel (200) and a plurality of secondary channels (210a-k, 220);
operating (403) the primary channel (200) with a carrier-sense multiple access with collision avoidance, CSMA/CA, scheme having a first of a plurality of CSMA/CA scheme configurations; and
operating (405) at least one selected secondary channel (210a-k) of the plurality of secondary channels with the CSMA/CA scheme having the first CSMA/CA scheme configuration, wherein each CSMA/CA scheme configuration defines a clear channel assessment, CCA, threshold, and/or a required type of inter frame space,
wherein the processing circuitry (111) is further configured to operate the primary channel (200) with a binary exponential back-off, BEB, and the at least one selected secondary channel (210a-k) without a BEB.

14. A computer program product comprising a non-transitory computer-readable storage medium for storing program code which causes a computer or a processor to perform the method (400) of claim 13 when the program code is executed by the computer or the processor.

## Patentansprüche

1. Drahtloser Sender (110) zum Übertragen von Daten an einen drahtlosen Empfänger (120), wobei der drahtlose Sender (110) Folgendes umfasst:
eine Kommunikationsschnittstelle (113), die dazu konfiguriert ist, Daten an den drahtlosen Empfänger (120) zu übertragen, unter Verwendung einer Vielzahl von Kanälen (130) über eine Vielzahl von unterschiedlichen Abschnitten einer Gesamtbandbreite, die einen primären Kanal (200) und eine Vielzahl von sekundären Kanälen (210a-k, 220) beinhaltet; und
eine Verarbeitungsschaltung (111), die dazu konfiguriert ist, den primären Kanal (200) mit einem Schema für Mehrfachzugriff mit Trägerprüfung und Kollisionsvermeidung, CSMA/CA-Schema, das eine erste von einer Vielzahl von CSMA/CA-Schemakonfigurationen aufweist, zu betreiben und mindestens einen ausgewählten sekundären Kanal (210a-k) der Vielzahl von sekundären Kanälen mit dem CSMA/CA-Schema, das die erste CSMA/CA-Schemakonfiguration aufweist, zu betreiben, wobei jede CSMA/CA-Schemakonfiguration einen Clear-Channel-Assessment-Schwellenwert, CCA-Schwellenwert, und/oder einen erforderlichen Typ von Interframe Space definiert,
wobei die Verarbeitungsschaltung (111) ferner dazu konfiguriert ist, den primären Kanal (200) mit einem Binary Exponential Back-Off, BEB, und den mindestens einen ausgewählten sekundären Kanal (210a-k) ohne BEB zu betreiben.

2. Drahtloser Sender (110) nach Anspruch 1, wobei jeder der Vielzahl von Kanälen (130) eine Bandbreite von 20 MHz aufweist.

3. Drahtloser Sender (110) nach Anspruch 1 oder 2, wobei die Verarbeitungsschaltung (111) dazu konfiguriert ist, das Schema für Mehrfachzugriff mit Trägerprüfung und Kollisionsvermeidung, CSMA/CA-Schema, mit der ersten CSMA/CA-Schemakonfiguration über den primären Kanal (200) und über alle der Vielzahl von sekundären Kanälen (210a-k) zu betreiben.

4. Drahtloser Sender (110) nach Anspruch 1 oder 2, wobei die Vielzahl von Kanälen in mindestens zwei Bandbreitensegmente (230, 240, 250) gruppiert ist, welche die gleiche Anzahl von Kanälen aufweisen, die ein primäres Bandbreitensegment (230) und mindestens ein sekundäres Bandbreitensegment (240, 250) beinhalten, wobei das primäre Bandbreitensegment (230) eine erste Teilmenge der Vielzahl von Kanälen umfasst, die den primären Kanal (200) und einen oder mehrere sekundäre Kanäle (220) beinhaltet, und wobei jedes der mindestens einen sekundären Bandbreitensegmente (240, 250) eine weitere Teilmenge der Vielzahl von Kanälen umfasst, die den mindestens einen ausgewählten sekundären Kanal (210a,b) und einen oder mehrere weitere sekundäre Kanäle (220) beinhaltet.

5. Drahtloser Sender (110) nach Anspruch 4, wobei die Verarbeitungsschaltung (111) dazu konfiguriert ist, ein Clear-Channel-Assessment-Schema, CCA-Schema, über den einen oder die mehreren weiteren sekundären Kanäle (220) nur für ein bestimmtes Zeitintervall vor einer Datenübertragung an den drahtlosen Empfänger (120) zu betreiben.

6. Drahtloser Sender (110) nach einem der vorhergehenden Ansprüche, wobei das CSMA/CA-Schema mit der ersten CSMA/CA-Schemakonfiguration, die über den primären Kanal (200) und über den mindestens einen ausgewählten sekundären Kanal (210a-k) betrieben wird, einen Arbitrated Interframe Space, AIFS, definiert.

7. Drahtloser Sender (110) nach einem der vorhergehenden Ansprüche, wobei das CSMA/CA-Schema mit der ersten CSMA/CA-Schemakonfiguration, das über den primären Kanal (200) und den mindestens einen ausgewählten sekundären Kanal (210a-k) betrieben wird, ein Clear-Channel-Assessment-Schema, CCA-Schema, umfasst, wobei das CCA-Schema für den primären Kanal (200) und den mindestens einen ausgewählten sekundären Kanal (210a-k) einen Signaldetektionsschwellenwert, SD-Schwellenwert, und einen Energiedetektionsschwellenwert, ED-Schwellenwert, definiert.

8. Drahtloser Sender (110) nach Anspruch 7, wobei der SD-Schwellenwert einen Wert von etwa -82 dBm aufweist und der ED-Schwellenwert einen Wert von etwa -62 dBm aufweist.

9. Drahtloser Sender (110) nach Anspruch 7 oder 8, wobei die Verarbeitungsschaltung (111) dazu konfiguriert ist, das CCA-Schema über den primären Kanal (200) und über den mindestens einen ausgewählten sekundären Kanal (210a-k) für einen Konfliktzeitraum zu betreiben.

10. Drahtloser Sender (110) nach einem der Ansprüche 7 bis 9, wobei die Vielzahl von Kanälen in mindestens zwei Bandbreitensegmente (230, 240, 250) gruppiert ist, welche die gleiche Anzahl von Kanälen aufweisen, die ein primäres Bandbreitensegment (230) und mindestens ein sekundäres Bandbreitensegment (240, 250) beinhalten, wobei das primäre Bandbreitensegment (230) eine erste Teilmenge der Vielzahl von Kanälen umfasst, die den primären Kanal (200) und einen oder mehrere sekundäre Kanäle (220) beinhaltet, und wobei jedes der mindestens einen sekundären Bandbreitensegmente (240, 250) eine weitere Teilmenge der Vielzahl von Kanälen umfasst, die den mindestens einen ausgewählten sekundären Kanal (210a,b) und einen oder mehrere weitere sekundäre Kanäle (220) beinhaltet, und wobei die Verarbeitungsschaltung (111) dazu konfiguriert ist, das sekundäre Bandbreitensegment (240, 250), das den mindestens einen ausgewählten sekundären Kanal (210a,b) beinhaltet, von einer weiteren Datenübertragung auszuschließen, falls ein Signalpegel des mindestens einen ausgewählten sekundären Kanals (210a,b) innerhalb des sekundären Bandbreitensegments (240, 250) innerhalb eines vordefinierten Zeitraums, nachdem der mindestens eine ausgewählte sekundäre Kanal (210a,b) frei ist, größer als der SD-Schwellenwert ist oder innerhalb des vordefinierten Zeitraums während eines AIFS-Zeitraums vor dem Beginn der Übertragung größer als der ED-Schwellenwert ist.

11. Drahtloser Sender (110) nach Anspruch 10, wobei die Verarbeitungsschaltung (111) dazu konfiguriert ist, mit dem Verwenden des ausgeschlossenen sekundären Bandbreitensegments (240, 250) für Datenübertragung wieder zu beginnen, wenn das ausgeschlossene sekundäre Bandbreitensegment (240, 250) für ein vordefiniertes Zeitintervall ungenutzt ist.

12. Drahtloser Sender (110) nach einem der vorhergehenden Ansprüche, wobei das CSMA/CA-Schema, das durch den primären Kanal (200) und den mindestens einen sekundären Kanal (210a-k) verwendet wird, das CSMA/CA-Schema gemäß dem IEEE 802.11-Standard ist.

13. Drahtloses Übertragungsverfahren (400) zum Übertragen von Daten an einen drahtlosen Empfänger (120), wobei das Verfahren (400) Folgendes umfasst:
Übertragen (401) von Daten an den drahtlosen Empfänger (120) unter Verwendung einer Vielzahl von Kanälen (130) über eine Vielzahl von unterschiedlichen Abschnitten einer Gesamtbandbreite, die einen primären Kanal (200) und eine Vielzahl von sekundären Kanälen (210a-k, 220) beinhaltet;
Betreiben (403) des primären Kanals (200) mit einem Schema für Mehrfachzugriff mit Trägerprüfung und Kollisionsvermeidung, CSMA/CA-Schema, das eine erste einer Vielzahl von CSMA/CA-Schemakonfigurationen aufweist; und
Betreiben (405) mindestens eines ausgewählten sekundären Kanals (210a-k) der Vielzahl von sekundären Kanälen mit dem CSMA/CA-Schema, das die erste CSMA/CA-Schemakonfiguration aufweist, wobei jede CSMA/CA-Schemakonfiguration einen Clear-Channel-Assessment-Schwellenwert, CCA-Schwellenwert, und/oder einen erforderlichen Typ von Interframe Space definiert,
wobei die Verarbeitungsschaltung (111) ferner dazu konfiguriert ist, den primären Kanal (200) mit einem Binary Exponential Back-Off, BEB, und den mindestens einen ausgewählten sekundären Kanal (210a-k) ohne BEB zu betreiben.

14. Computerprogrammprodukt, umfassend ein nichttransitorisches computerlesbares Speichermedium zum Speichern von Programmcode, welcher einen Computer oder einen Prozessor dazu veranlasst, das Verfahren (400) nach Anspruch 13 durchzuführen, wenn der Programmcode durch den Computer oder den Prozessor ausgeführt wird.

## Revendications

1. Émetteur sans fil (110) destiné à transmettre des données à un récepteur sans fil (120), dans lequel l'émetteur sans fil (110) comprend :
une interface de communication (113) configurée pour transmettre des données au récepteur sans fil (120) à l'aide d'une pluralité de canaux (130) sur une pluralité de parties différentes d'une bande passante totale, comportant un canal principal (200) et une pluralité de canaux secondaires (210a-k, 220) ; et
un circuit de traitement (111) configuré pour faire fonctionner le canal principal (200) avec un schéma d'accès multiple à détection de porteuse avec évitement de collision, CSMA/CA, ayant une première configuration de schéma CSMA/CA parmi une pluralité de configurations de schéma CSMA/CA et pour faire fonctionner au moins un canal secondaire sélectionné (210a-k) parmi la pluralité de canaux secondaires avec le schéma CSMA/CA ayant la première configuration de schéma CSMA/CA, dans lequel chaque configuration de schéma CSMA/CA définit un seuil d'évaluation de canal libre, CCA, et/ou un type requis d'espace inter-trame,
dans lequel le circuit de traitement (111) est également configuré pour faire fonctionner le canal principal (200) avec un recul exponentiel binaire, BEB, et l'au moins un canal secondaire sélectionné (210a-k) sans BEB.

2. Émetteur sans fil (110) selon la revendication 1, dans lequel chacun de la pluralité de canaux (130) a une bande passante de 20 MHz.

3. Émetteur sans fil (110) selon les revendications 1 ou 2, dans lequel le circuit de traitement (111) est configuré pour faire fonctionner le schéma d'accès multiple à détection de porteuse avec évitement de collision, CSMA/CA, avec la première configuration de schéma CSMA/CA sur le canal principal (200) et sur l'ensemble des canaux secondaires (210a-k).

4. Émetteur sans fil (110) selon la revendication 1 ou 2, dans lequel la pluralité de canaux est regroupée en au moins deux segments de bande passante (230, 240, 250) ayant le même nombre de canaux comportant un segment de bande passante principal (230) et au moins un segment de bande passante secondaire (240, 250), dans lequel le segment de bande passante principal (230) comprend un premier sous-ensemble de la pluralité de canaux comportant le canal principal (200) et un ou plusieurs canaux secondaires (220), et dans lequel chacun de l'au moins un segment de bande passante secondaire (240, 250) comprend un autre sous-ensemble de la pluralité de canaux comportant l'au moins un canal secondaire sélectionné (210a,b) et un ou plusieurs autres canaux secondaires (220).

5. Émetteur sans fil (110) selon la revendication 4, dans lequel le circuit de traitement (111) est configuré pour faire fonctionner un schéma d'évaluation de canal libre, CCA, sur les un ou plusieurs canaux secondaires supplémentaires (220) uniquement pendant un certain intervalle de temps avant une transmission de données au récepteur sans fil (120).

6. Émetteur sans fil (110) selon l'une quelconque des revendications précédentes, dans lequel le schéma CSMA/CA avec la première configuration de schéma CSMA/CA fonctionnant sur le canal principal (200) et sur l'au moins un canal secondaire sélectionné (210a-k) définit un espace intertrame arbitré, AIFS.

7. Émetteur sans fil (110) selon l'une quelconque des revendications précédentes, dans lequel le schéma CSMA/CA avec la première configuration de schéma CSMA/CA fonctionnant sur le canal principal (200) et l'au moins un canal secondaire sélectionné (210a-k) comprend un schéma d'évaluation de canal clair, CCA, dans lequel le schéma CCA définit pour le canal principal (200) et l'au moins un canal secondaire sélectionné (210a-k) un seuil de détection de signal, SD, et un seuil de détection d'énergie, ED.

8. Émetteur sans fil (110) selon la revendication 7, dans lequel le seuil SD a une valeur d'environ -82 dBm et le seuil ED a une valeur d'environ -62 dBm.

9. Émetteur sans fil (110) selon la revendication 7 ou 8, dans lequel le circuit de traitement (111) est configuré pour faire fonctionner le schéma CCA sur le canal principal (200) et sur l'au moins un canal secondaire sélectionné (210a-k) pendant une période de contention.

10. Émetteur sans fil (110) selon l'une quelconque des revendications 7 à 9, dans lequel la pluralité de canaux est regroupée en au moins deux segments de bande passante (230, 240, 250) comportant le même nombre de canaux, comportant un segment de bande passante principal (230) et au moins un segment de bande passante secondaire (240, 250), dans lequel le segment de bande passante principal (230) comprend un premier sous-ensemble de la pluralité de canaux, comportant le canal principal (200) et un ou plusieurs canaux secondaires (220), et dans lequel chacun de l'au moins un segment de bande passante secondaire (240, 250) comprend un autre sous-ensemble de la pluralité de canaux, comportant l'au moins un canal secondaire sélectionné (210a, b) et un ou plusieurs autres canaux secondaires (220), et dans lequel le circuit de traitement (111) est configuré pour exclure le segment de bande passante secondaire (240, 250) comportant l'au moins un canal secondaire sélectionné (210a,b) d'une transmission de données ultérieure, en cas de niveau de signal de l'au moins un canal secondaire sélectionné (210a,b) dans le segment de bande passante secondaire (240, 250) est supérieur au seuil SD dans une période de temps prédéfinie après que l'au moins un canal secondaire sélectionné (210a,b) soit libre ou supérieur au seuil ED dans la période de temps prédéfinie pendant une période de temps AIFS avant le début de la transmission.

11. Émetteur sans fil (110) selon la revendication 10, dans lequel le circuit de traitement (111) est configuré pour recommencer à utiliser le segment de bande passante secondaire exclu (240, 250) pour la transmission de données, si le segment de bande passante secondaire exclu (240, 250) est inactif pendant un intervalle de temps prédéfini.

12. Émetteur sans fil (110) selon l'une quelconque des revendications précédentes, dans lequel le schéma CSMA/CA utilisé par le canal principal (200) et l'au moins un canal secondaire (210a-k) est le schéma CSMA/CA selon la norme IEEE 802.11.

13. Procédé de transmission sans fil (400) pour transmettre des données à un récepteur sans fil (120), dans lequel le procédé (400) comprend :
la transmission (401) des données au récepteur sans fil (120) à l'aide d'une pluralité de canaux (130) sur une pluralité de parties différentes d'une bande passante totale comportant un canal principal (200) et une pluralité de canaux secondaires (210a-k, 220) ;
la mise en fonctionnement (403) du canal principal (200) avec un schéma d'accès multiple à détection de porteuse avec évitement de collision, CSMA/CA, ayant une première parmi une pluralité de configurations de schémas CSMA/CA ; et
la mise en fonctionnement (405) d'au moins un canal secondaire sélectionné (210a-k) parmi la pluralité de canaux secondaires avec le schéma CSMA/CA ayant la première configuration de schéma CSMA/CA, dans lequel chaque configuration de schéma CSMA/CA définit un seuil d'évaluation de canal clair, CCA, et/ou un type requis d'espace inter-trame,
dans lequel le circuit de traitement (111) est également configuré pour faire fonctionner le canal principal (200) avec un recul exponentiel binaire, BEB, et l'au moins un canal secondaire sélectionné (210a-k) sans BEB.

14. Produit de programme informatique comprenant un support de stockage non transitoire lisible par ordinateur pour stocker un code de programme qui amène un ordinateur ou un processeur à réaliser le procédé (400) selon la revendication 13, lorsque le code de programme est exécuté par l'ordinateur ou le processeur.
